# EUROPÄISCHE PATENTSCHRIFT

(11) **EP 1 358 099 B1**
(45) Veröffentlichungstag und Bekanntmachung des Hinweises auf die Patenterteilung: **22.12.2004**
(21) Anmeldenummer: 02712723.2
(22) Anmeldetag: 19.01.2002
(51) Int. Cl.: B62D 5/04

(54) **AKTUATOR FÜR EINE STEER-BY-WIRE-LENKANLAGE**
ACTUATOR FOR A STEER-BY-WIRE- STEERING SYSTEM
ACTIONNEUR POUR SYSTEME DE DIRECTION A COMMANDE PAR CABLE

(30) Priorität: 27.01.2001 DE 10103667
(43) Veröffentlichungstag der Anmeldung: 05.11.2003
(73) Patentinhaber: ROBERT BOSCH GMBH, 70442 Stuttgart (DE); ZF-Lenksysteme GmbH, 73527 Schwäbisch Gmünd (DE)
(72) Erfinder: LOHNER, Herbert, 71292 Friolzheim (DE); DOMINKE, Peter, 74321 Bietigheim-Bissingen (DE); CAO, Chi-Thuan, 70825 Korntal-Muenchingen (DE); PFEIFFER, Wolfgang, 71723 Grossbottwar (DE); LEIMBACH, Klaus-Dieter, 71696 Moeglingen (DE); HARTER, Werner, 75428 Illingen (DE); HAFERMALZ, Jens, 76829 Landau-Mörzheim (DE); HAUSSMANN, Matthias, 89561 Ballmertshofen (DE); KNÖDLER, Helmut, 73547 Lorch (DE); SCHUELE, Juergen, 73525 Schwäbisch Gmünd (DE)
(86) Internationale Anmeldenummer: PCT/DE2002/000164
(87) Internationale Veröffentlichungsnummer: WO 2002/058985

(56) Entgegenhaltungen:
- DE-A- 19 902 556
- DE-A- 19 902 557
- DE-A- 19 911 892
- JP-A- 8 258 728
- US-A- 5 828 972

## Beschreibung

### Stand der Technik

Die Erfindung betrifft einen Aktuator für eine Steer-by-Wire-Lenkanlage eines Fahrzeugs, mit einer Abtriebswelle, mit einem elektrischen Antrieb, und mit einem Untersetzungsgetriebe zwischen elektrischem Antrieb und Abtriebswelle sowie eine Steer-by-Wire-Lenkanlage gemäß dem Oberbegriff der nebengeordneten Ansprüche 6 und 7. DE-A-19 911 892 offenbart einen Aktuator für eine Lenkanlage nach dem Oberbegriff in Anspruch 1.

Bei einer Steer-by-Wire-Lenkanlage ist im Normalbetrieb nur eine elektrische Signalverbindung zwischen einer Lenkhandhabe, wie z.B. einem Lenkrad, und den gelenkten Rädern des Fahrzeugs wirksam. Bei einer Funktionsstörung der Steer-by-Wire-Lenkanlage muss auf eine mechanische oder hydraulische Ersatzlenkung zurückgegriffen werden. Diese Ersatzlenkung wird im Folgenden als Rückfallebene bezeichnet.

Bei einer Steer-by-Wire-Lenkanlage wird der Fahrerlenkwunsch in Form eines Lenkraddrehwinkels von einen oder mehreren Drehwinkelsensoren, die an der Lenksäule des Fahrzeugs angeordnet sind, erfasst. Ein Lenkaktuator, welcher zur Verstellung der gelenkten Räder dient, wird in Abhängigkeit des Fahrerlenkwunsches angesteuert. Dieser Lenkaktuator kann als elektrisch angetriebenes Lenkgetriebe ausgeführt sein.

Um dem Fahrer eine Rückmeldung von den zwischen der Fahrbahn und den gelenkten Rädern wirkenden Kräften oder Momenten zu vermitteln, ist an der Lenksäule ein Lenkhandhabenaktuator vorgesehen, der in Abhängigkeit der genannten Kräfte oder Momente ein Moment in die Lenksäule einleitet. Dieses, nachfolgend als Lenkgefühl bezeichnete Moment ist von großem Einfluss auf die Wahrnehmung des Fahrzeugs durch den Fahrer und den Fahrerlenkwunsch.

Darüber hinaus sind Lenkhandhabenaktuatoren mit elektrischem Antrieb bekannt, welche für das Lenkgefühl am Lenkrad sorgen.

Diese Lenkhandhabenaktuatoren weisen, ebenso wie die Lenkaktuatoren, wegen des zweitweise erforderlichen hohen Drehmoments ein Untersetzungsgetriebe auf. Das Spiel des Untersetzungsgetriebes verschlechtert die Stabilität der Regelung des Lenkaktuators und verschlechtert somit auch die Fahrstabilität des Fahrzeugs. Außerdem wird es vom Fahrer als störend empfunden, wenn es im Lenkhandhabenaktuator auftritt. Außerdem ändert sich das Lenkgefühl durch den Verschleiß des Untersetzungsgetriebes im Laufe der Zeit.

Im Zusammenhang mit der Erfindung wird im Folgenden häufig nur von Aktuator gesprochen. Gemeint sind damit sowohl Lenkhandhabenaktuatoren als auch Lenkaktuatoren.

Der Erfindung liegt die Aufgabe zu Grunde, einen Aktuator für eine Steer-by-Wire-Lenkanlage eines Fahrzeugs bereitzustellen, welcher auch mit zunehmendem Verschleiß spielfrei und ohne vom Fahrer wahrnehmbare Änderungen des Lenkgefühls arbeitet, eine hohe Funktionssicherheit aufweist und außerdem in der Lage ist, bei Bedarf große Drehmomente in die Lenkanlage einzuleiten.

Diese Aufgabe wird erfindungsgemäß durch Anspruch 1 gelöst, Aktuator für eine Steer-by-Wire-Lenkanlage eines Fahrzeugs,

### Vorteile der Erfindung

Im Normalbetrieb einer Steer-by-Wire-Lenkanlage, bspw. wenn das Fahrzeug annähernd gradeaus fährt, treten häufige Drehrichtungswechsel bei niedrigen Lenkmomenten auf. In diesen Fällen werden die mindestens zwei Elektromotoren des erfindungsgemäßen Aktuators so geregelt, dass mindestens ein Motor für eine Drehrichtung des Aktuators ein Funktionsmoment abgibt und der oder die anderen Elektromotoren ein kleines Moment in die andere Richtung abgeben. Dadurch wird ein eventuell vorhandenes Spiel zwischen elektrischem Antrieb und Abtriebswelle eliminiert. Am Lenkrad ist kein Getriebespiel spürbar und es treten auch keine Geräusche beim Wechsel der Drehrichtung des Lenkrads auf. Der zweite Motor, welcher das Gegenmoment erzeugt, wird ebenso wie der erste Motor vom Steuergerät der Steer-by-Wire-Lenkanlage angesteuert. Damit ist das Gegenmoment des zweiten Motors bekannt. In Folge dessen kann über die gesamte Lebensdauer des Fahrzeug ein gleichbleibend gutes Lenkgefühl gewährleistet werden.

Bei der Verwendung des erfindungsgemäßen Aktuators als Lenkaktuator ist ebenfalls gewährleistet, dass im sensiblen Bereich des Geradeausfahrens das Getriebespiel für die Positionsregelung des Lenkgetriebes bzw. eines Drehstabventils nicht auftritt. Auch Geräusche, welche durch einen Drehrichtungswechsel und das Getriebespiel entstehen, werden wirkungsvoll verhindert.

Wenn einer der elektrischen Motoren überlastet wird, können alle Elektromotoren in die gleiche Richtung arbeiten und somit eine Überlastung verhindern. Damit vervielfacht sich das in die Steer-by-Wire-Lenkanlage einkoppelbare Moment entsprechend der Zahl der vorhandenen Elektromotoren. Da jeder dieser Elektromotoren kurzfristig überlastet werden kann, sind somit auch größere Momente zumindest kurzfristig durch den erfindungsgemäßen Aktuator realisierbar. Außerdem können das Getriebe und die Ritzel entsprechend kleiner und kostengünstiger ausgelegt werden, da das vom Aktuator abgegebene Gesamtmoment von mehreren Elektromotoren über mehrere Ritzel in das Untersetzungsgetriebe eingeleitet wird. Außerdem verringert sich wegen des kleineren Getriebes der Platzbedarf des erfindungsgemäßen Aktuators, was für den Einsatz eines erfindungsgemäßen Aktuators im Fahrzeug entscheidend sein kann.

Für den Fall, dass einer der Elektromotoren des elektrischen Antriebs ausfällt, kann der mindestens eine verbleibende Elektromotor die Aufgaben des Aktuators übernehmen, ohne dass es zu Beeinträchtigungen der Fahrsicherheit kommt. In diesem Zustand ist lediglich das störende Getriebespiel vom Fahrer wahrnehmbar. Dies ist allerdings für eine kurze Zeit, bspw. für die Fahrt zur Werkstatt, tolerierbar.

Weitere Ergänzungen der Erfindung sehen vor, dass das Untersetzungsgetriebe ein Zahnradgetriebe ist, dass die Elektromotoren je ein Antriebsritzel aufweisen, dass die Antriebsritzel Teil des Zahnradgetriebes sind und/oder, dass die Zähnezahl der Antriebsritzel unterschiedlich ist, so dass sich ein ruhiger Lauf des Aktuators ergibt.

In weiterer Ergänzung der Erfindung ist vorgesehen, dass die Elektromotoren je einen Rotorlagegeber aufweisen, so dass die Rotorlagegeber auch zur Erfassung des Drehwinkels der Abtriebswelle geeignet sind. Wegen der unterschiedlichen Zähnezahl der Antriebsritzel kann aus den von den Rotorlagegebern an das Steuergerät der Steer-by-Wire-Lenkanlage abgegebenen Signale der Drehwinkel der Abtriebswelle eindeutig bestimmt werden. Dadurch kann auf den Einsatz von Multi-turn-Sensoren mit einem Messbereich von über 360° verzichtet werden. Diese Multi-turn-Sensoren sind sehr teuer und außerdem ist beim Ausfall eines dieser Sensoren die elektronische Steuerung der Steer-by-Wire-Lenkanlage nicht mehr funktionsfähig.

Der erfindungsgemäße Aktuator kann eine Lenksäule oder ein Lenkgetriebe antreiben, so dass er jedoch nach Bedarf als Lenkhandhabenaktuator oder Lenkaktuator einsetzbar ist. Für den Fall, dass das Lenkgetriebe ein Zahnstangenlenkgetriebe ist, treibt die Abtriebswelle des Aktuators das Ritzel des Lenkgetriebes an, während für den Fall, dass das Lenkgetriebe ein Zahnstangen-Hydro-Lenkgetriebe ist, die Abtriebswelle des Aktuators das Drehstabventil des Zahnstangen-Hydro-Lenkgetriebes antreibt.

Die eingangs genannte Aufgabe wird erfindungsgemäß auch gelöst durch eine Steer-By-Wire-Lenkanlage für ein Fahrzeug, mit einer Lenkhandhabe, mit einem die Position der Lenkhandhabe steuernden Lenkhandhaben-Aktuator, mit einem die Position der Lenkhandhabe erfassenden Drehwinkelsensor, mit einem die Stellung der gelenkten Räder mindestens mittelbar steuernden Lenkaktuator, mit einem die Position des Lenkaktuators erfassenden ersten Istwert-Sensor und mit einem elektronischen Steuergerät, wobei der Lenkhandhabenaktuator ein Lenkhandhabenaktuator nach einem der Ansprüche 1 bis 5 ist, und/oder dass der Lenkaktuator ein Lenkaktuator nach einem der Ansprüche 1 bis 4 sowie 6 bis 8 ist. Bei dieser Steer-by-Wire-Lenkanlage kommen die o.g. Vorteile des erfindungsgemäßen Aktuators voll zum Tragen.

Weitere Vorteile und vorteilhafte Ausgestaltungen der Erfindung sind der nachfolgenden Zeichnung und deren Beschreibung entnehmbar.

### Zeichnung

Es zeigen:
- Figur 1: eine schematische Darstellung eines Ausführungsbeispiels einer erfindungsgemäßen Steer-by-Wire-Lenkanlage,
- Figur 2: ein Ausführungsbeispiel eines als Ventilaktuator ausgebildeten erfindungsgemäßen Aktuators und
- Figur 3: ein Ausführungsbeispiel eines als Lenkaktuator ausgebildeten erfindungsgemäßen Aktuators.

### Beschreibung der Ausführungsbeispiele

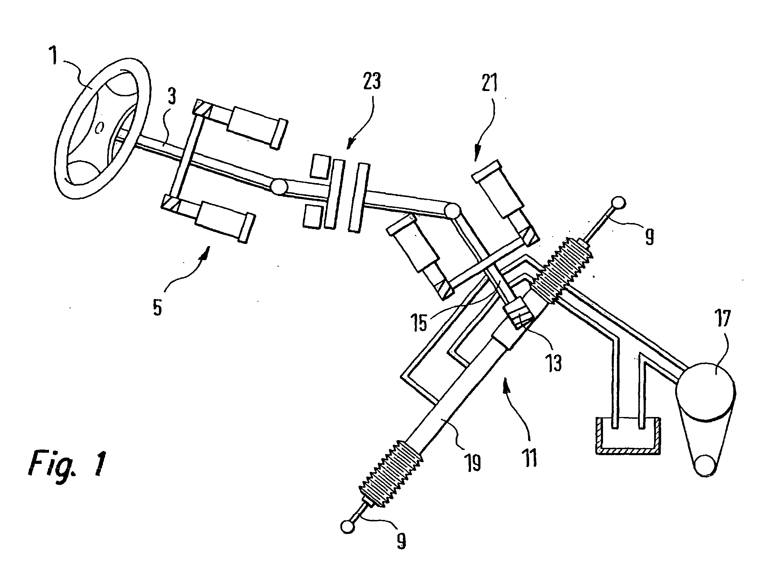

Figur 1 zeigt eine schematische Darstellung eines Ausführungsbeispiels einer erfindungsgemäßen Steer-by-Wire-Lenkanlage mit einem Hydro-Servolenkgetriebe.

Ein Lenkrad 1 dient als Lenkhandhabe und ist an einer Lenksäule 3 befestigt, die im Chassis eines nicht dargestellten Fahrzeugs gelagert ist. Statt des Lenkrads 1 kann auch eine andere Lenkhandhabe, wie z.B. ein sog. Sidestick, vorgesehen sein, deren Bewegung in eine Drehbewegung der Lenksäule 3 umgesetzt wird. An der Lenksäule 3 ist ein Lenkradaktuator 5 angeordnet.

Die in Figur 1 nicht dargestellten gelenkten Räder werden über eine Spurstange 9 verstellt. Betätigt wird die Spurstange 9 in dem Ausführungsbeispiel gemäß Figur 1 über ein Hydro-Servolenkgetriebe 11. Die Erfindung ist jedoch auch zum Einsatz bei anderen Lenkgetrieben geeignet.

Das Hydro-Servolenkgetriebe 11 ist an sich bekannt und wird deshalb nicht in allen Details erläutert. Es weist eine in Figur 1 nicht dargestellte Zahnstange auf, die auf die Spurstangen 9 wirkt, und welche von einem Ritzel 13 angetrieben wird. Oberhalb des Ritzels 13 und drehfest mit diesem verbunden ist ein Drehstabventil 15 zur Steuerung der Servounterstützung des Hydro-Servolenkgetriebes 11 angeordnet. Das Drehstabventil 15 steuert den Förderstrom einer Servopumpe 17 in einen parallel zu der Zahnstange angeordneten doppelt wirkenden Arbeitszylinder 19.

Im Unterschied zu konventionellen Lenkanlagen wird das Hydro-Servolenkgetriebe 11 nach Figur 1 im Steer-by-Wire-Betrieb, wie er in Figur 1 dargestellt ist, von einem Lenkaktuator 21 und nicht von der Lenksäule 3 betätigt wird. In Figur 1 ist eine Kupplung 23 der Lenksäule 3 im geöffneten Zustand dargestellt. D.h., es besteht keine mechanische Verbindung zwischen Lenkrad 1 über die Lenksäule 3 zum Hydro-Servolenkgetriebe 11. Damit besteht auch keine mechanische Verbindung vom Lenkrad 1 zu den gelenkten Rädern.

Der Lenkaktuator 21 wird von einem nicht dargestellten Steuergerät so angesteuert, dass er den Fahrerlenkwunsch, der sich durch Drehen des Lenkrads 1 ausdrückt, in eine Lenkbewegung der gelenkten Räder umsetzt. Dazu ist es einerseits erforderlich, dass sowohl der Drehwinkel des drehfest mit dem Lenkrad 1 verbundenen Teils der Lenksäule 3 als auch die Stellung der Spurstange 9 bzw. der Drehwinkel des Ritzels 13 eindeutig erfasst werden. Dies geschieht bei den Steer-by-Wire-Lenkanlagen nach dem Stand der Technik durch Drehwinkelsensoren.

Wenn die Steer-by-Wire-Lenkanlage eine Störung aufweist, wird die Kupplung 23 geschlossen und somit auf die mechanische Rückfallebene umgeschaltet.

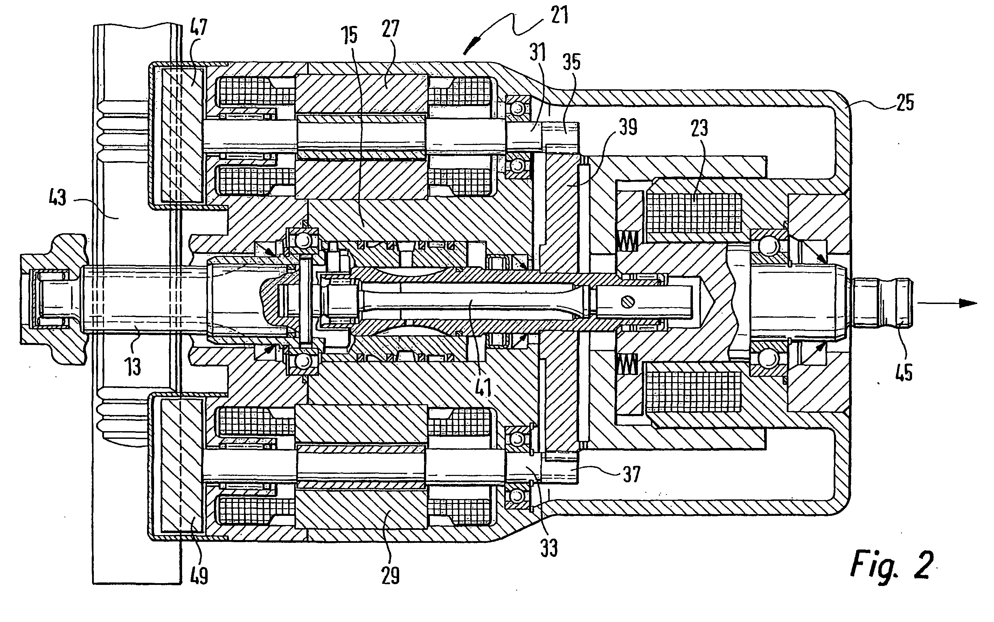

In Figur 2 wird ein erstes Ausführungsbeispiel eines erfindungsgemäßen Aktuators im Schnitt dargestellt. Der erfindungsgemäße Aktuator gemäß Figur 2 ist als Lenkaktuator 21 ausgebildet. Abweichend von der Darstellung in Figur 1 sind in den Lenkaktuator 21 nach Figur 2 ein Drehstabventil 15 sowie eine elektromagnetische Kupplung 23 integriert. In einem Gehäuse 25 des Lenkaktuators 21 sind ein erster Elektromotor 27 und ein zweiter Elektromotor 29 integriert. An der Motorwelle 31 und 33 des ersten Elektromotors 27 und des zweiten Elektromotors 29 ist je ein Ritzel 35 und 37 ausgebildet. Die Ritzel 35 und 37 sind in Eingriff mit einem Getrieberad 39, welches drehfest mit der Eingangsseite des Drehstabventils 15 verbunden ist. Über einen Drehstab 41 wird eine Drehbewegung des Getriebrads 49 auf das Ritzel 13 übertragen. Der Drehstab 41 übernimmt bei diesem Ausführungsbeispiel die Funktion der Abtriebswelle. Das Ritzel 13 ist mit einer Zahnstange 43 im Eingriff. Die Funktionsweise eines Drehstabventils 15 ist aus dem Stand der Technik bekannt und wird deshalb im Zusammenhang mit der vorliegenden Erfindung nicht näher erläutert.

Dadurch, dass der erste Elektromotor 27 und der zweite Elektromotor 29 über je ein Ritzel 35 und 37 auf das Getrieberad 39 einwirken, kann durch eine geeignete Ansteuerung des ersten Elektromotors 27 und des zweiten Elektromotors 29 ein spielfreier Antrieb des Getriebrads 39 erreicht werden. Dies geschieht dadurch, dass bspw. der erste Elektromotor 27 eine erste Drehrichtung hat, um eine bestimmte Lenkbewegung auszuführen. Gleichzeitig wird der zweite Elektromotor 29 so angesteuert, dass er der Drehbewegung des ersten Elektromotors 27 ein kleines Moment entgegensetzt. Dadurch ist gewährleistet, dass die Zahnflanken des Ritzels 35 und des Getriebrads 39 stets spielfrei aneinanderliegen. Dadurch werden Knackgeräusche und Totzeitglieder bei der Regelung der Stellung der gelenkten Räder vermieden. Diese gegenseitige "Verspannung" von erstem Elektromotor 27 und zweitem Elektromotor 29 ist besonders vorteilhaft bei der Übertragung geringer Lenkmomente bei häufig wechselnden Drehrichtungen. Wenn ein großes Drehmoment übertragen werden soll, können erster Elektromotor 27 und zweiter Elektromotor 29 so angesteuert werden, dass sie nicht gegeneinander, sondern miteinander arbeiten, so dass sich die von erstem und zweitem Elektromotor 27 und 29 aufgebrachten Momente addieren. Dies gilt auch für eine kurzzeitige Überlastung beider Motoren, so dass mit dem erfindungsgemäßen Lenkaktuator 21 kurzfristig sehr hohe Momente übertragen werden können.

In eingebautem Zustand des Lenkaktuators 21 ist eine Eingangswelle 45 drehfest mit einer in Figur 2 nicht dargestellten Lenksäule 3 verbunden. Im Steer-by-Wire-Betrieb ist die Verbindung zwischen Eingangswelle 45 und Drehstab 41 durch eine elektromagnetische Kupplung 23 unterbrochen. Wenn auf den Betrieb der Rückfallebene umgeschaltet werden soll, wird die Kupplung 23 geschlossen.

Der erste Elektromotor 27 weist einen ersten Rotorlagegeber 47 auf. Der zweite Elektromotor 29 weist einen zweiten Rotorlagegeber 49 auf. Der erste und zweite Rotorlagegeber 47 und 49 sind in der Lage, die Drehposition der Motorwellen 31 und 33 in einem Winkelbereich zwischen O und 360° anzugeben. Mehrere Umdrehungen der Rotorwelle 31 und 33 können vom ersten Rotorlagegeber 47 und vom zweiten Rotorlagegeber 49 nicht unterschieden werden. Wenn die Zähnezahl des Ritzels 35 und die Zähnezahl des Ritzels 37 voneinander abweichen, können Drehwinkel > 360° des Getrieberads 39 und damit auch des Drehstabs 41 bzw. des Ritzels 13 eindeutig aus den Signalen des ersten Rotorlagegebers 47 und des zweiten Rotorlagegebers 49 ermittelt werden. Aus diesem Grund kann bei Verwendung eines erfindungsgemäßen Lenkaktuators 21 durch die geeignete Auswertung der Signale von erstem und zweitem Rotorlagegeber 47 und 49 auch den Einsatz eines teuren Multi-turn-Sensors im Bereich des Drehstabventils 15, des Ritzels 13 oder, falls der Aktuator als Lenkhandhabenaktuator eingesetzt wird, der Lenksäule 3 verzichtet werden. Außerdem ist bei Ausfall eines der Elektromotoren 27 oder 29 die Steer-by-Wire-Lenkanlage noch voll funktionsfähig. Zur Erzielung einer noch höheren Redundanz können auch mehr als zwei Elektromotoren in dem Lenkaktuator 21 integriert werden.

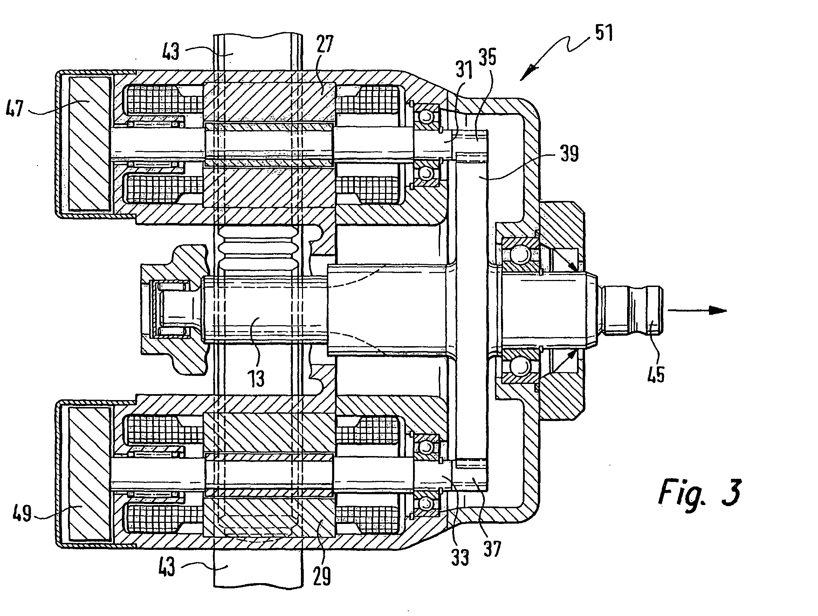

In Figur 3 ist ein zweites Ausführungsbeispiel eines Lenkaktuators 51 im Längsschnitt dargestellt. Dieser Lenkaktuator 51 ist zur Betätigung eines Zahnstangen-Lenkgetriebes vorgesehen und weist außerdem keine Kupplung auf. Eingangswelle 45, Getrieberad 39 und Ritzel 13 sind bei diesem Ausführungsbeispiel einstückig ausgeführt, bzw. sind drehfest miteinander verbunden. Die Eingangswelle 45 kann beim Betrieb der Rückfallebene über eine nicht dargestellte Kupplung mit der ebenfalls nicht dargestellten Lenksäule mechanisch gekoppelt werden. Das Ritzel 13 ist im Eingriff mit einer Zahnstange 43. Diese Bauweise ist sehr viel kompakter und kostengünstiger als als ein Hydro-Servolenkgetriebe. Auch bei diesem Ausführungsbeispiel werden die erfindungsgemäßen vorteile, wie sie an Hand der Ausführungsbeispiele gemäß Figur 1 und Figur 2 erläutert wurden, in vollem Umfang erreicht. Es wird deshalb auf das oben Gesagte verwiesen.

Wie bereits erwähnt, kann der erfindungsgemäße Aktuator auch als Lenkhandhabenaktuator eingesetzt werden. In diesem Fall wird die Lenksäule 3 von der Abtriebswelle angetrieben oder ist sogar einstückig mit der Abtriebswelle ausgeführt.

## Patentansprüche

1. Aktuator für eine elektrisch betätigbare Lenkanlage eines Fahrzeugs, mit einer Abtriebswelle, mit einem elektrischen Antrieb, mit einem Untersetzungsgetriebe zwischen elektrischem Antrieb und Abtriebswelle, wobei der elektrische Antrieb mindestens zwei Elektromotoren (27, 29) aufweist und das Untersetzungsgetriebe ein Zahnradgetriebe ist und die Elektromotoren (27, 29) je ein Antriebsritzel (35, 37) aufweisen und die Antriebsritzel (35, 37) Teil des Zahnradgetriebes sind, **dadurch gekennzeichnet, dass** der Aktuator für eine Steer-by-Wire-Lenkanlage ausgebildet ist und dass die Elektromotoren (27, 29) je einen Rotorlagegeber (47, 49) aufweisen und die Zähnezahlen der Antriebsritzel (35, 37) derart unterschiedlich sind, dass Drehwinkel > 360° der Abtriebswelle eindeutig aus den Signalen des ersten Rotorlagegebers (47) und des zweiten Rotorlagergebers (49) ermittelt werden können.

2. Aktuator nach Anspruch 1, **dadurch gekennzeichnet, dass** die Abtriebswelle eine Lenksäule (3) antreibt.

3. Aktuator nach Anspruch 1, **dadurch gekennzeichnet, dass** die Abtriebswelle ein Lenkgetriebe (11) antreibt.

4. Aktuator nach Anspruch 3, **dadurch gekennzeichnet, dass** das Lenkgetriebe ein Zahnstangen-Lenkgetriebe ist.

5. Aktuator nach Anspruch 3, **dadurch gekennzeichnet, dass** das Lenkgetriebe ein Hydro-Servolenkgetriebe (11) ist.

6. Steer-by-Wire-Lenkanlage für ein Fahrzeug, mit einer Lenkhandhabe (1), mit einem die Position der Lenkhandhabe (1) steuernden Lenkhandhaben-Aktuator (5), mit einem die Stellung der gelenkten Räder mindestens mittelbar steuernden Lenk-Aktuator (21), und mit einem elektronischen Steuergerät, **dadurch gekennzeichnet, dass** der Lenkhandhaben-Aktuator (5) ein Lenkhandhaben-Aktuator nach einem der Ansprüche 1 oder 2 ist.

7. Steer-by-Wire-Lenkanlage für ein Fahrzeug, mit einer Lenkhandhabe (1), mit einem die Position der Lenkhandhabe (1) steuernden Lenkhandhaben-Aktuator (5) mit einem die Stellung der gelenkten Räder mindestens mittelbar steuernden Lenkaktuator (21), und mit einem elektronischen Steuergerät, **dadurch gekennzeichnet, dass** der Lenk-Aktuator (21) ein Lenk-Aktuator nach einem der Ansprüche 1 sowie 3 bis 5 ist.

## Claims

1. Actuator for a steering system of a vehicle which can be actuated electrically, having an output shaft, having electric drive, having a stepdown gear mechanism between the electric drive and output shaft, the electric drive having at least two electric motors (27, 29) and the stepdown gear mechanism being a gearwheel mechanism and the electric motors (27, 29) each having a drive pinion (35, 37) and the drive pinions (35, 37) being part of the gearwheel mechanism, **characterized in that** the actuator is designed for a steer-by-wire steering system and **in that** the electric motors (27, 29) each have a rotor position sensor (47, 49) and the numbers of teeth of the drive pinions (35, 37) are different such that angles of rotation > 360° of the output shaft can be determined unambiguously from the signals of the first rotor position sensor (47) and of the second rotor position sensor (49).

2. Actuator according to Claim 1, **characterized in that** the output shaft drives a steering column (3).

3. Actuator according to Claim 1, **characterized in that** the output shaft drives a steering gear (11).

4. Actuator according to Claim 3, **characterized in that** the steering gear is a toothed-rack steering gear.

5. Actuator according to Claim 3, **characterized in that** the steering gear is a hydraulic power-assisted steering gear (11).

6. Steer-by-wire steering system for a vehicle, having a steering handle (1), having a steering handle actuator (5) which controls the position of the steering handle (1), having a steering actuator (21) which controls the position of the steered wheels at least indirectly, and having an electronic control device, **characterized in that** the steering handle actuator (5) is a steering handle actuator according to one of Claims 1 or 2.

7. Steer-by-wire steering system for a vehicle, having a steering handle (1), having a steering handle actuator (5) which controls the position of the steering handle (1), having a steering actuator (21) which controls the position of the steered wheels at least indirectly, and having an electronic control device, **characterized in that** the steering actuator (21) is a steering actuator according to one of Claims 1 and 3 to 5.

## Revendications

1. Actionneur pour une installation de direction d'un véhicule pouvant être actionnée électriquement, comprenant un arbre de sortie, un entraînement électrique, un réducteur à engrenages entre l'entraînement électrique et l'arbre de sortie, l'entraînement électrique présentant au moins deux moteurs électriques (27, 29) et le réducteur à engrenages étant un engrenage, les moteurs électriques (27, 29) présentant chacun un pignon d'attaque (35, 37) formant partie de l'engrenage,
**caractérisé en ce que**
l'actionneur est configuré pour une installation de direction à commande par câble (steer-by-wire) et les moteurs électriques (27, 29) présentent chacun un détecteur de palier de rotor (47, 49), les nombres de dents du pignon d'attaque (35, 37) étant différents de manière à pouvoir déterminer précisément un angle de rotation > 360° de l'arbre de sortie à partir des signaux du premier détecteur de palier de rotor (47) du second détecteur de palier de rotor (49).

2. Actionneur selon la revendication 1,
**caractérisé en ce que**
l'arbre de sortie entraîne une colonne de direction (3).

3. Actionneur selon la revendication 1,
**caractérisé en ce que**
l'arbre de sortie entraîne un boîtier de direction (11).

4. Actionneur selon la revendication 3,
**caractérisé en ce que**
le boîtier de direction est un boîtier de direction à crémaillères.

5. Actionneur selon la revendication 3,
**caractérisé en ce que**
le boîtier de direction est un boîtier de direction servo-hydraulique (11).

6. Installation de direction à commande par câble (steer-by-wire) pour un véhicule, comprenant un volant de direction (1), un actionneur de volant de direction (5) commandant la position du volant de direction (1), un actionneur de direction (21) commandant au moins directement la position des roues dirigées, et un appareil de commande électronique,
**caractérisé en ce que**
l'actionneur de volant de direction (5) est un actionneur selon l'une des revendications 1 ou 2.

7. Installation de direction steer-by-wire pour un véhicule, comprenant un volant de direction (1), un actionneur de volant de direction (5) commandant la position du volant de direction (1), un actionneur de direction (21) commandant au moins directement la position des roues dirigées, et un appareil de commande électronique,
**caractérisé en ce que**
l'actionneur de direction (21) est un actionneur selon l'une des revendications 1 et 3 à 5.
